# EUROPEAN PATENT APPLICATION

(11) **EP 2 485 550 A1**
(43) Date of publication of application: **08.08.2012**
(21) Application number: 10819895.3
(22) Date of filing: 27.09.2010
(51) Int. Cl.: H04W 72/04

(54) **METHOD AND DEVICE FOR DETERMINING CARRIER SCHEDULING MODE**

(30) Priority: 29.09.2009 CN 200910235258
(71) Applicant: China Academy of Telecommunications Technology, Haidian District, Beijing 100191 (CN)
(72) Inventor: LI, Haitao, Beijing 100083 (CN); XU, Fangli, Beijing 100083 (CN); LIANG, Jing, Beijing 100083 (CN)
(74) Representative: Reboussin, Yohann Mickaël Noël
(86) International application number: PCT/CN2010/077368
(87) International publication number: WO 2011/038666

(57) **Abstract**

A method for indicating and determining a carrier scheduling mode in a Long Term Evolution-Advanced (LTE-A) system is disclosed in the present invention. The method is that: a network device determines whether a component carrier adopts a cross-carrier scheduling mode to perform resource scheduling, and transmits first indication information that indicating whether to the component carrier adopts the cross-carrier scheduling mode to perform the resource scheduling to a User Equipment, so as to indicate the UE to determine whether adopting the cross-carrier scheduling mode to perform the resource scheduling on a component carrier supported by the UE itself according to the received first indication information. By adopting the present solution, the UE supporting multi-carriers in the LTE-A system is able to determine which mode one certain component carrier or several certain component carriers adopt to perform the resource scheduling, thereby performing data reception/transmission correctly.

## Description

The present application claims priority to Chinese Patent Application No. 200910235258.9, filed with the State Intellectual Property Office of China on September 29, 2009 and entitled "Method, system and device for determining carrier scheduling mode", which is hereby incorporated by reference in its entirety.

### Field of the Invention

The present invention relates to the field of radio communications and particularly to a method and device for determining a carrier scheduling mode.

### Background of the Invention

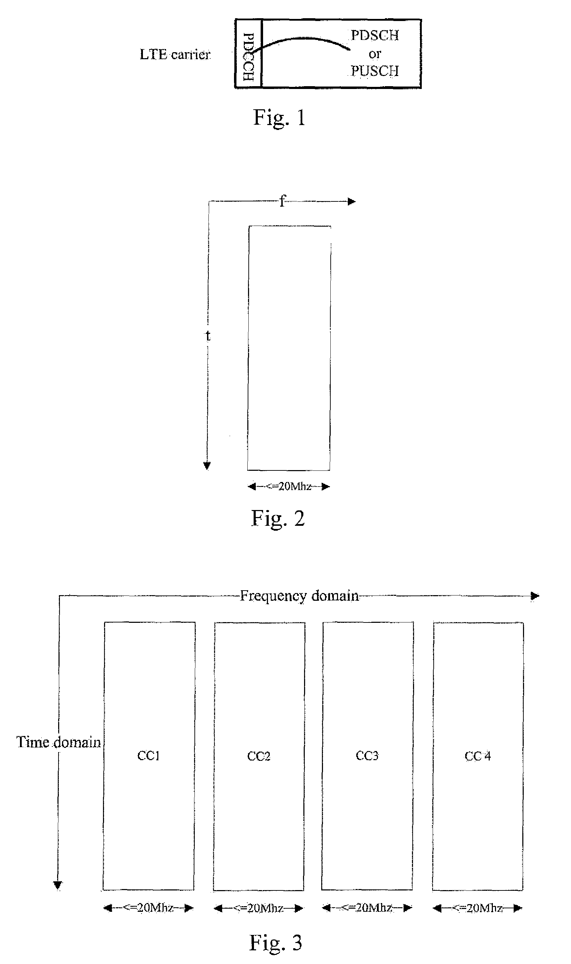

Uplink and downlink resources are scheduled over a Physical Downlink Control Channel (PDCCH) in a Long Term Evolution (LTE) system. Particularly, a resource of a Physical Downlink Shared Channel (PDSCH) and a resource of a Physical Uplink Shared Channel (PUSCH) can be scheduled over the PDCCH. Since the LTE system is a single-carrier system, always uplink and downlink data resources of the present carrier are scheduled over the PDCCH as illustrated in Fig. 1.

In the LTE system, there is only one carrier with the maximum bandwidth of 20MHz available in a cell as illustrated in Fig. 2. In the Long Term Evolution-Advanced (LTE-A) system, the peak rate of the system is improved so greatly over the LTE system that there are a downlink rate up to 1Gbps and an uplink rate up to 500Mbps. Such a demand has not been satisfied over the bandwidth of 20MHz. Carrier aggregation is introduced to the LTE-A system, that is, a plurality of consecutive or inconsecutive Component Carriers (CCs) are aggregated together in the same cell to serve concurrently a User Equipment (UE) as needed to thereby offer a desired rate. In order to ensure that the UE can operate over each aggregated component carrier in the LTE system, the maximum bandwidth of each component carrier does not exceed 20MHz, and the largest number of component carriers aggregated in the LTE-A system is five. The CA in the LTE-A system is as illustrated in Fig. 3.

Four CCs are aggregated in the LTE-A system illustrated in Fig. 3. A base station can transmit data with a UE concurrently over four component carriers to thereby improve the throughput of the system or can schedule the UE over a part of the CCs.

An LTE-A system will support a larger system bandwidth, e.g., 100MHz, than an LTE system by connecting resources of a plurality of component carriers together, particularly in the following two approaches.

In a first approach, a plurality of consecutive component carriers are aggregated to provide a larger transmission bandwidth for the LTE-A.

In a second approach, a plurality of inconsecutive LTE carriers are aggregated to provide a larger transmission bandwidth for the LTE-A.

In view of the design complexity and the scheduling flexibility of a PDCCH as well as asymmetric uplink and downlink carrier aggregation, a PDCCH of a carrier aggregation-enabled system is designed in the following two schemes.

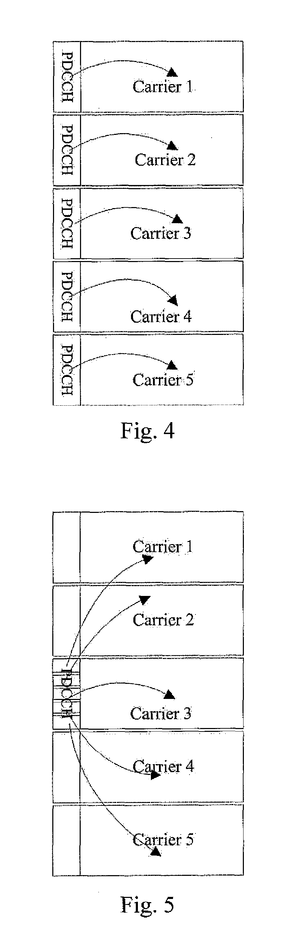

A first scheme is the PDCCH 1a mode:
a PDCCH is transmitted separately over each component carrier, and only a physical resource of the present carrier can be scheduled over the PDCCH, which is also referred to as intra-carrier scheduling, as illustrated in Fig. 4.

A second scheme is the PDCCH 1b mode:
a plurality of carrier resources are scheduled over a plurality of separate PDCCHs borne over a specific carrier, which is also referred to as cross-carrier scheduling, and this scheme is an improvement to the first scheme. In this case, a resource of only one component carrier can be scheduled over each PDCCH, as illustrated in Fig. 5.

As for carrier scheduling, the inventors have identified the following technical problem in the prior art.

In the LTE-A system, the UE cannot determine which of the modes is adopted for carrier scheduling of a component carrier supported by the UE, that is, the UE cannot determine whether to adopt the intra-carrier scheduling or the cross-carrier scheduling mode for resource scheduling of a specific CC or several CCs.

### Summary of the Invention

Embodiments of the invention provide a method, system and device for determining a carrier scheduling mode in order to address such a problem that a UE cannot determine which mode is adopted for carrier scheduling of a component carrier supported by the UE in an LTE-A system.

A method for indicating a carrier scheduling mode in an LTE-A system includes:
determining, by a network device, whether to adopt a cross-carrier scheduling mode for resource scheduling of a component carrier;
transmitting, by the network device, a first indicator of whether to adopt the cross-carrier scheduling mode for resource scheduling of the component carrier to a user equipment to indicate to the user equipment whether to adopt the cross-carrier scheduling mode for resource scheduling over the component carrier supported by the user equipment; and
determining, by the user equipment, from the received indicator whether to adopt the cross-carrier scheduling mode for resource scheduling over the component carrier supported by the user equipment.

A method for determining a carrier scheduling mode in a Long Term Evolution-Advanced (LTE-A) system includes:
receiving, by a user equipment, a first indicator, transmitted from a network device, of whether to adopt a cross-carrier scheduling mode for resource scheduling of a component carrier; and
determining, by the user equipment, from the first indicator whether to adopt the cross-carrier scheduling mode for resource scheduling over the component carrier supported by the user equipment.

A network device includes:
a determining unit configured to determine whether to adopt a cross-carrier scheduling mode for a component carrier of a user equipment; and
a transmitting unit configured to transmit a first indicator of whether to adopt the cross-carrier scheduling mode for resource scheduling of the component carrier to the user equipment.

A user equipment includes:
a receiving unit configured to receive a first indicator, transmitted from a network device, of whether to adopt a cross-carrier scheduling mode for resource scheduling of a component carrier; and
a determining unit configured to determine from the first indicator whether to adopt the cross-carrier scheduling mode for resource scheduling over the component carrier supported by the user equipment.

In the invention, a network device transmits an indicator of whether to adopt a cross-carrier scheduling mode for resource scheduling of a component carrier to a user equipment; and the user equipment determines from the received indicator whether to adopt the cross-carrier scheduling mode for resource scheduling over the component carrier supported by the user equipment, so that a UE supporting multi-carriers in an LTE-A system can determine which mode is adopted for carrier scheduling of a specific component carrier or some component carriers.

### Brief Description of the Drawings

Fig. 1 is a schematic diagram of intra-carrier scheduling in an LTE system in the prior art;

Fig. 2 is a schematic diagram of a carrier in an LTE system in the prior art;

Fig. 3 is a schematic diagram of carrier aggregation in an LTE-A system in the prior art;

Fig. 4 is a schematic diagram of intra-carrier scheduling in an LTE-A system in the prior art;

Fig. 5 is a schematic diagram of cross-carrier scheduling in an LTE-A system in the prior art;

Fig. 6 is a schematic flow chart of a method according to an embodiment of the invention;

Fig. 7 is a schematic structural diagram of a system according to an embodiment of the invention;

Fig. 8 is a schematic structural diagram of a network device according to an embodiment of the invention; and

Fig. 9 is a schematic structural diagram of a user equipment according to an embodiment of the invention.

### Detailed Description of the Embodiments

In order to enable a UE in an LTE-A system to determine which mode is adopted for carrier scheduling of a component carrier supported by the UE, an embodiment of the invention provides a method for determining a carrier scheduling mode in an LTE-A system, and in this method, a network device in the LTE-A system transmits a first indicator of whether to adopt a cross-carrier scheduling mode for resource scheduling of a component carrier to a user equipment to instruct the user equipment to determine from the first indicator whether to adopt the cross-carrier scheduling mode for resource scheduling over the component carrier supported by the user equipment.

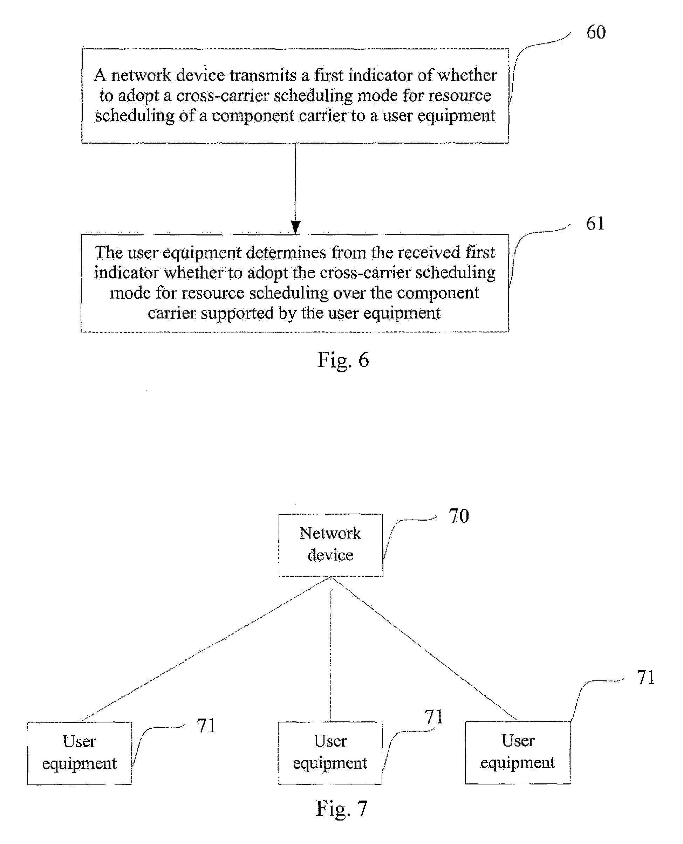

Referring to Fig. 6, a method for determining a carrier scheduling mode in an LTE-A system according to an embodiment of the invention includes the following operations.

Operation 60: A network device transmits a first indicator of whether to adopt a cross-carrier scheduling mode for resource scheduling of a component carrier to a user equipment to instruct the user equipment to determine from the first indicator whether to adopt the cross-carrier scheduling mode for resource scheduling over the component carrier supported by the user equipment.

Operation 61: The user equipment determines from the received first indicator whether to adopt the cross-carrier scheduling mode for resource scheduling over the component carrier supported by the user equipment.

In a first embodiment, the network device carries in a system message the first indicator of whether to adopt the cross-carrier scheduling mode for resource scheduling of a component carrier and broadcasts the system message to respective user equipments subject to the network device in the operation 60.

Correspondingly, the user equipment determines from the received system message whether to adopt the cross-carrier scheduling mode or an intra-carrier scheduling mode for resource scheduling over all component carriers supported by the user equipment in the operation 61. Particularly, when the first indicator of the cross-carrier scheduling mode being adopted for resource scheduling of a component carrier is carried in the system message, the user equipment determines the cross-carrier scheduling mode to be adopted for resource scheduling over all component carriers supported by the user equipment; or when the first indicator of the cross-carrier scheduling mode being not adopted for resource scheduling of a component carrier is carried in the system message, the user equipment determines the intra-carrier scheduling mode to be adopted for resource scheduling over all component carriers supported by the user equipment.

Preferably, the network device may further carry in a system message or Radio Resource Control (RRC) signalling a reconfigured second indicator of whether to adopt the cross-carrier scheduling mode for resource scheduling of the component carrier and transmit the system message or the RRC signalling to the user equipment after the network device transmits the first indicator to the user equipment; and the user equipment determines again from the system message or the RRC signalling whether to adopt the cross-carrier scheduling mode or the intra-carrier scheduling mode for resource scheduling over all component carriers supported by the user equipment upon reception of the system message or the RRC signalling.

In a second embodiment, the network device carries in a system message the first indicator of whether to adopt the cross-carrier scheduling mode for resource scheduling of a component carrier and broadcasts the system message to the user equipment over the component carrier in the first indicator in the operation 60.

Correspondingly, the user equipment determines from the received system message whether to adopt the cross-carrier scheduling mode or an intra-carrier scheduling mode for resource scheduling over the component carrier in the indicator in the operation 61. Particularly, when the first indicator of the cross-carrier scheduling mode being adopted for resource scheduling of a component carrier is carried in the system message, the user equipment determines the cross-carrier scheduling mode to be adopted for resource scheduling over the component carrier in the first indicator; or when the first indicator of the cross-carrier scheduling mode being not adopted for resource scheduling of a component carrier is carried in the system message, the user equipment determines the intra-carrier scheduling mode to be adopted for resource scheduling over the component carrier in the first indicator.

Preferably, the network device may further carry in a system message or RRC signalling a reconfigured second indicator of whether to adopt the cross-carrier scheduling mode for resource scheduling of the component carrier and transmit the system message or the RRC signalling to the user equipment over the component carrier in the second indicator after the network device transmits the first indicator to the user equipment; and the user equipment determines again from the system message or the RRC signalling whether to adopt the cross-carrier scheduling mode or the intra-carrier scheduling mode for resource scheduling over the component carrier upon reception of the system message or the RRC signalling.

In a third embodiment, the network device carries in RRC signalling a first indicator of whether to adopt the cross-carrier scheduling mode for resource scheduling of all component carriers supported by the user equipment and transmits the RRC signalling to the user equipment in the operation 60.

Correspondingly, the user equipment determines from the received RRC signalling whether to adopt the cross-carrier scheduling mode or an intra-carrier scheduling mode for resource scheduling over all component carriers supported by the user equipment in the operation 61. Particularly, when the first indicator of the cross-carrier scheduling mode being adopted for resource scheduling of all component carriers supported by the user equipment is carried in the RRC signalling, the user equipment determines the cross-carrier scheduling mode to be adopted for resource scheduling over all component carriers supported by the user equipment; or when the second indicator of the cross-carrier scheduling mode being not adopted for resource scheduling over all component carriers supported by the user equipment is carried in the RRC signalling, the user equipment determines the intra-carrier scheduling mode to be adopted for resource scheduling over all component carriers supported by the user equipment.

Preferably, the network device may further carry in RRC signalling a reconfigured second indicator of whether to adopt the cross-carrier scheduling mode for resource scheduling of all component carriers supported by the user equipment and transmit the RRC signalling to the user equipment after the network device transmits the first indicator to the user equipment; and the user equipment determines again from the RRC signalling whether to adopt the cross-carrier scheduling mode or the intra-carrier scheduling mode for resource scheduling over all component carriers supported by the user equipment upon reception of the RRC signalling.

In a fourth embodiment, the network device carries in RRC signalling the first indicator of whether to adopt the cross-carrier scheduling mode for resource scheduling of a specific component carrier supported by the user equipment and transmits the RRC signalling to the user equipment in the operation 60.

Correspondingly, the user equipment determines from the received RRC signalling whether to adopt the cross-carrier scheduling mode or an intra-carrier scheduling mode for resource scheduling over the component carrier in the first indicator in the operation 61. Particularly, when the first indicator of the cross-carrier scheduling mode being adopted for resource scheduling of the specific component carrier supported by the user equipment is carried in the RRC signalling, the user equipment determines the cross-carrier scheduling mode to be adopted for resource scheduling over the component carrier in the first indicator; or when the first indicator of the cross-carrier scheduling mode being not adopted for resource scheduling of the specific component carrier supported by the user equipment is carried in the RRC signalling, the user equipment determines the intra-carrier scheduling mode to be adopted for resource scheduling over the component carrier in the first indicator.

Preferably, the network device may further carry in RRC signalling a reconfigured second indicator of whether to adopt the cross-carrier scheduling mode for resource scheduling of the specific component carrier supported by the user equipment and transmit the RRC signalling to the user equipment after the network device transmits the first indicator to the user equipment; and the user equipment determines again from the RRC signalling whether to adopt the cross-carrier scheduling mode or the intra-carrier scheduling mode for resource scheduling over the component carrier in the second indicator upon reception of the RRC signalling.

After the operation 61, the user equipment detects a Physical Downlink Control Channel (PDCCH) over the component carrier, for which the cross-carrier scheduling mode is determined to be adopted for resource scheduling, in accordance with a Downlink Control Information (DCI) format corresponding to the cross-carrier scheduling mode; or the user equipment detects a PDCCH over the component carrier, for which the cross-carrier scheduling mode is determined not to be adopted for resource scheduling, in accordance with a DCI format corresponding to the intra-carrier scheduling mode. The DCI format corresponding to the cross-carrier scheduling mode includes at least information on the number of the carrier where the scheduled physical resource is located, so that the UE can acquire a resource scheduling instruction of the corresponding carrier from the number of the carrier included in the DCI by monitoring the carrier where the PDCCH is located and further transmit and receive data over the scheduled carrier resource. The DCI format corresponding to the intra-carrier scheduling mode does not include information on the number of any carrier.

Preferably, the network device may further transmit identifiers of all or a part of component carriers supported by the LTE-A system to the user equipment when the network device transmits the first indicator or the second indicator to the user equipment in the operation 60; and the user equipment may determine a frequency point location of a component carrier from the received identifier of the component carrier.

The invention will be detailed below.

The method in the present invention may be performed in the following several solutions.

### The First Solution:

A user equipment is notified of whether the system adopts cross-carrier scheduling, i.e., whether to adopt the PDCCH 1b mode, from the network side by broadcasting a system message.

This solution is applicable to cross-carrier scheduling configuration in which one CC is not distinguished from another at the system level, that is, each UE is configured at the network side to have the cross-carrier scheduling mode enabled or not enabled, that is, the same configuration value is broadcasted over each CC participating in broadcasting the system message. Information on the carrier number of each CC that can be aggregated in the system may further be broadcasted from the network side. If cross-carrier scheduling is configured to be enabled in the system message broadcast, the configuration is validated if a UE receiving the broadcast is capable of supporting cross-carrier scheduling, i.e., the UE performs cross-carrier scheduling in the PDCCH 1b mode by using the carrier number; or the UE performs resource scheduling only in the intra-carrier scheduling (i.e., PDCCH 1a) mode if the UE is incapable of supporting cross-carrier scheduling. If cross-carrier scheduling is configured not to be enabled in the system message broadcast, each UE receiving the broadcast enables only the intra-carrier scheduling mode and disables the PDCCH 1b mode.

If a configuration scheme regarding cross-carrier scheduling is changed in the system, this will be reflected in a change to the system message, and the UE can acquire information on the changed carrier scheduling configuration by monitoring the changed system message; and a connected UE can further be notified of the change to the carrier scheduling configuration scheme from the network side in dedicated RRC signalling.

### The Second Solution:

A user equipment is notified of whether to enable cross-carrier scheduling for each component carrier in the system from the network side by broadcasting a system message.

This solution is applicable to cross-carrier scheduling configuration in which one CC is distinguished from another at the system level, that is, each UE is configured at the network side to have the cross-carrier scheduling mode enabled or not enabled for each CC that can be aggregated, i.e., a configuration value of the carrier scheduling mode over each CC participating in broadcasting the system message is broadcasted over the corresponding CC. Information on the carrier number of each CC participating in broadcasting the system message or the carrier numbers of all the other CCs that can be aggregated may further be broadcasted over the corresponding CC. If cross-carrier scheduling is configured to be enabled in the system message broadcast over a specific CC, the configuration over that carrier is validated (that is, cross-carrier scheduling is performed in the PDCCH 1b mode by using the carrier number) if a UE receiving the broadcast is capable of supporting cross-carrier scheduling; or the UE enables only the intra-carrier scheduling (i.e., PDCCH 1a) mode over that carrier if the UE is incapable of supporting cross-carrier scheduling. If cross-carrier scheduling is configured not to be enabled in the system message broadcast over a specific CC, each UE receiving the broadcast enables only the intra-carrier scheduling mode and disables the PDCCH 1b mode.

If a configuration scheme regarding cross-carrier scheduling over a specific CC is changed in the system, this will be reflected in a change to the system message over that CC, and the UE can acquire information on the changed carrier scheduling configuration by monitoring the changed system message over that CC; and a connected UE may further be notified of the change to the carrier scheduling configuration scheme of a specific CC or some CCs in dedicated RRC signalling.

### The Third Solution:

A UE is notified of whether to enable cross-carrier scheduling from the network side in dedicated RRC signalling.

This solution is applicable to cross-carrier scheduling configuration in which one CC is not distinguished from another at the UE level, that is, each UE can be configured with a different carrier scheduling scheme at the network side but without distinguishing one CC from another while configuring a specific UE with a carrier scheduling scheme, that is, the UE is configured to have the PDCCH 1b mode enabled separately, and a different carrier scheduling scheme can be enabled for a different UE in the same system. 1-bit information can be used at the network side in RRC signalling, in which a carrier scheduling scheme of a UE is configured, to indicate whether the PDCCH 1b mode is enabled for the UE, and also information on the numbers of all the current aggregated carriers or all the carriers that can be aggregated of the UE can optionally be carried in the signalling for use in the cross-carrier scheduling mode.

A carrier scheduling scheme configured for a specific UE can be reconfigured separately at the network side in dedicated RRC signalling.

### The Fourth Solution:

A UE is notified of whether to enable cross-carrier scheduling for a specific component carrier from the network side in dedicated RRC signalling.

This solution is applicable to cross-carrier scheduling configuration in which one CC is distinguished from another at the UE level, that is, each carrier that can be aggregated of each UE can be configured with a different carrier scheduling scheme at the network side. 1-bit information can be used at the network side in RRC signalling, in which a carrier scheduling scheme over a specif carrier of a UE is configured, to indicate whether the PDCCH 1b mode is enabled over that CC, and also information on the number corresponding to that CC or the numbers of all the current aggregated carriers of the UE can optionally be carried in the signalling for use in the cross-carrier scheduling mode.

A carrier scheduling scheme configured for a specific CC in a set of CCs that can be aggregated for a specific UE can be reconfigured separately at the network side in dedicated RRC signalling.

The method in the invention will be described below in embodiments.

### The First Embodiment:

This embodiment corresponds to the foregoing first solution and is particularly as follows.

There are three component carriers in an LTE-A system, denoted with CC1, CC2 and CC3 respectively, each of which is a backward compatible carrier. The cross-carrier scheduling mode being configured in the system to be enabled is broadcasted over each of the CC1, the CC2 and the CC3 together with information on the carrier numbers of all the CCs, {{CCs1, 00}, {CC2, 01}, {CC3, 10}}. A UE1 capable of supporting cross-carrier scheduling enables the PDCCH 1b mode to use the CC1 in scheduling data transmission over the CC1, the CC2 and the CC3, a UE2 capable of supporting cross-carrier scheduling enables the PDCCH 1b mode to use the CC2 in scheduling data transmission over the CC2 and the CC3, and a UE3 incapable of supporting cross-carrier scheduling disables the PDCCH 1b mode and enables the intra-carrier scheduling mode.

### The Second Embodiment:

This embodiment corresponds to the foregoing second solution and is particularly as follows.

There are three component carriers in an LTE-A system, denoted with CC1, CC2 and CC3 respectively, where the CC1 and the CC2 are backward compatible carriers and the CC3 is an extended carrier. The cross-carrier scheduling mode is configured in a system message over the CC1 not to be enabled for that carrier; the cross-carrier scheduling mode is configured in a system message broadcasted over the CC2 to be enabled for that carrier, and information on the carrier numbers of the CC2 and the CC3, {{CC2, 01}, {CC3, 10}} is broadcasted; and no system message broadcast is set over the CC3. Each UE capable of supporting cross-carrier scheduling in the system disables the PDCCH 1b mode over the CC1 and enables intra-carrier scheduling for data transmission over the CC1 as well as enables the PDCCH 1b mode over the CC2 for cross-carrier scheduling for data transmission over the CC2 and the CC3. Other UEs incapable of supporting cross-carrier scheduling enables the intra-carrier scheduling mode.

### The Third Embodiment:

This embodiment corresponds to the foregoing third solution and is particularly as follows.

There are three component carriers in an LTE-A system, denoted with CC1, CC2 and CC3 respectively, where the CC1 and the CC2 are backward compatible carriers and the CC3 is an extended carrier. A UE1 operates with aggregation over the CC1 and the CC2, and a UE2 operates with aggregation over all the three CCs. Cross-carrier scheduling is configured in RRC signalling from the network side to the UE1 not to be enabled and is configured in RRC signalling to the UE2 to be enabled. Upon reception of the respective RRC configuration signalling, the UE1 disables the PDCCH 1b mode over both the CC1 and the CC2 and enables the intra-carrier scheduling mode to schedule data transmission over the respective carriers, and the UE2 disables the PDCCH 1a mode over the CC1 and enables cross-carrier scheduling for data transmission over the CC1, the CC2 and the CC3.

### The Fourth Embodiment:

This embodiment corresponds to the foregoing fourth solution and is particularly as follows.

There are three component carriers in an LTE-A system, denoted with CC1, CC2 and CC3 respectively, where the CC1 and the CC2 are backward compatible carriers and the CC3 is an extended carrier. A UE1 operates with aggregation over the CC1 and the CC2, and a UE2 operates with aggregation over all the three CCs. Cross-carrier scheduling is configured in RRC signalling from the network side to the UE1 to be enabled for both the CC1 and the CC2 and is configured in RRC signalling to the UE2 to be enabled for the CC1 and the CC3 but not for the CC2. Upon reception of the respective RRC configuration signalling, the UE1 enables cross-carrier scheduling over the CC1 for data transmission over the CC1 and the CC2; and the UE2 enables cross-carrier scheduling over the CC1 for data transmission over the CC1 and the CC3 and enables the intra-carrier scheduling mode over the CC2.

### The Fifth Embodiment:

A carrier scheduling mode is reconfigured in RRC signalling in this embodiment particularly as follows.

There are three component carriers in an LTE-A system, denoted with CC1, CC2 and CC3 respectively, where the CC1 and the CC2 are backward compatible carriers and the CC3 is an extended carrier. A UE1 operates with aggregation over all the three CCs and complies with currently received RRC configuration signalling by enabling cross-carrier scheduling over the CC1 for data transmission over the CC1 and the CC3 and enabling the intra-carrier scheduling mode over the CC2. Thereafter RRC reconfiguration signalling is transmitted from the network side to the UE1 to indicate cross-carrier scheduling being not enabled for the CC1 but enabled for the CC2 and the CC3. The UE1 enables cross-carrier scheduling over the CC2 for data transmission over the CC2 and the CC3 and enables the intra-carrier scheduling mode over the CC1 upon reception of the reconfiguration signalling.

### The Sixth Embodiment:

A carrier scheduling mode is reconfigured by broadcasting a system message in this embodiment particularly as follows.

There are three component carriers in an LTE-A system, denoted with CC1, CC2 and CC3 respectively, where the CC1 and the CC2 are backward compatible carriers and the CC3 is an extended carrier. At this time, cross-carrier scheduling is configured in a system message over the CC1 not to be enabled; the cross-carrier scheduling mode is configured in a system message broadcasted over the CC2 to be enabled, and information on the carrier numbers of the CC2 and the CC3, {CC2, 01}, {CC3, 10}} is broadcasted; and no system message broadcast is set over the CC3. A connected UE1 receiving the broadcast operates over the three component carriers with intra-carrier scheduling being enabled over the CC1 and data transmission over the CC2 and the CC3 being scheduled over the CC2. Then there is such a change to the carrier scheduling scheme of the system that the cross-carrier scheduling mode is configured to be enabled for each CC. Thus, cross-carrier scheduling is configured in both of the system messages over the CC1 and the CC2 to be enabled, and the carrier number of the CC1, {CC1, 00} is broadcasted over the CC1. The UE1 acquires the changed carrier scheduling scheme of the system by monitoring the change to the system messages over the CC1 and the CC2 and enables the CC1 in scheduling data transmission over the CC1, the CC2 and the CC3.

Referring to Fig. 7, an embodiment of the invention further provides a system for scheduling a carrier resource, and this system includes:
a network device 70 configured to transmit a first indicator of whether to adopt a cross-carrier scheduling mode for resource scheduling of a component carrier to a user equipment; and
the user equipment 71 configured to determine from the received first indicator whether to adopt the cross-carrier scheduling mode for resource scheduling over the component carrier supported by the user equipment.

In a first embodiment, the network device 70 is configured to carry in a system message the first indicator of whether to adopt the cross-carrier scheduling mode for resource scheduling of all component carriers in the system and broadcast the system message to the user equipment.

Correspondingly, the user equipment 71 is configured to determine from the broadcasted system message whether to adopt the cross-carrier scheduling mode or an intra-carrier scheduling mode for resource scheduling over all component carriers supported by the user equipment.

In a second embodiment, the network device 70 is configured to carry in a system message the first indicator of whether to adopt the cross-carrier scheduling mode for resource scheduling of a specific component carrier and broadcast the system message to the user equipment over the component carrier.

Correspondingly, the user equipment 71 is configured to determine from the broadcasted system message whether to adopt the cross-carrier scheduling mode or an intra-carrier scheduling mode for resource scheduling over the component carrier.

In a third embodiment, the network device 70 is configured to carry in Radio Resource Control (RRC) signalling the first indicator of whether to adopt the cross-carrier scheduling mode for resource scheduling of all component carriers supported by the user equipment and transmit the RRC signalling to the user equipment.

Correspondingly, the user equipment 71 is configured to determine from the RRC signalling whether to adopt the cross-carrier scheduling mode or an intra-carrier scheduling mode for resource scheduling over all component carriers supported by the user equipment.

In a fourth embodiment, the network device 70 is configured to carry in Radio Resource Control (RRC) signalling the first indicator of whether to adopt the cross-carrier scheduling mode for resource scheduling of a specific component carrier supported by the user equipment and transmit the RRC signalling to the user equipment.

Correspondingly, the user equipment 71 is configured to determine from the RRC signalling whether to adopt the cross-carrier scheduling mode or an intra-carrier scheduling mode for resource scheduling over the component carrier.

The user equipment 71 is further configured to detect a PDCCH over the component carrier, for which the cross-carrier scheduling mode is determined to be adopted for resource scheduling, in accordance with a DCI format corresponding to the cross-carrier scheduling mode; or to detect a PDCCH over the component carrier, for which the cross-carrier scheduling mode is determined not to be adopted for resource scheduling, in accordance with a DCI format corresponding to the intra-carrier scheduling mode.

The network device 70 is further configured to transmit identifiers of all or a part of component carriers supported by the LTE-A system to the user equipment.

Correspondingly, the user equipment 71 is further configured to determine a frequency point location of a component carrier from the received identifier of the component carrier.

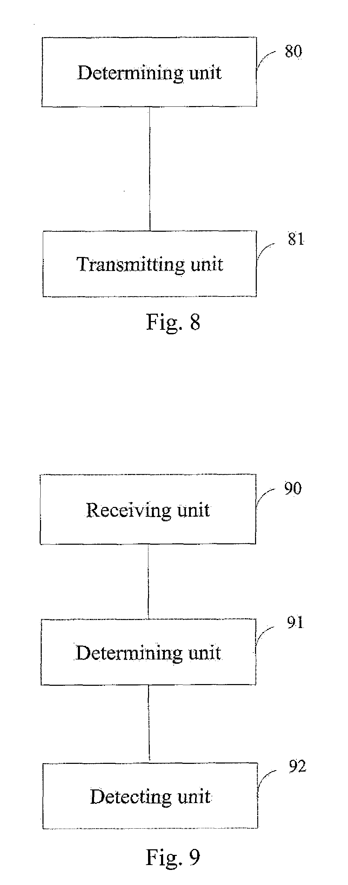

Referring to Fig. 8, an embodiment of the invention further provides a network device applicable to a system for scheduling a carrier resource, and this network device includes:
a determining unit 80 configured to determine whether to adopt a cross-carrier scheduling mode for a component carrier; and
a transmitting unit 81 configured to transmit a first indicator of whether to adopt the cross-carrier scheduling mode for resource scheduling of the component carrier to a user equipment.

The transmitting unit 81 includes one or any combination of a first indicating unit, a second indicating unit, a third indicating unit and a fourth indicating unit.

The first indicating unit is configured to carry in a system message the first indicator of whether to adopt the cross-carrier scheduling mode for resource scheduling of all component carriers and broadcast the system message to the user equipment.

The second indicating unit is configured to carry in a system message the first indicator of whether to adopt the cross-carrier scheduling mode for resource scheduling of a specific component carrier and broadcast the system message to the user equipment over the component carrier.

The third indicating unit is configured to carry in Radio Resource Control (RRC) signalling the first indicator of whether to adopt the cross-carrier scheduling mode for resource scheduling of all component carriers supported by the user equipment and transmit the RRC signalling to the user equipment.

The fourth indicating unit is configured to carry in Radio Resource Control (RRC) signalling the first indicator of whether to adopt the cross-carrier scheduling mode for resource scheduling of a specific component carrier supported by the user equipment and transmit the RRC signalling to the user equipment.

The transmitting unit 81 is further configured to transmit identifiers of all or a part of component carriers supported by the LTE-A system to the user equipment.

Referring to Fig. 9, an embodiment of the invention provides a user equipment including:
a receiving unit 90 configured to receive a first indicator, transmitted from a network device, of whether to adopt a cross-carrier scheduling mode for resource scheduling of a component carrier; and
a determining unit 91 configured to determine from the first indicator whether to adopt the cross-carrier scheduling mode for resource scheduling over the component carrier supported by the user equipment.

In a first embodiment, the receiving unit 90 is configured to receive a system message, broadcasted from the network device, carrying the first indicator.

Correspondingly, the determining unit 91 is configured to determine from the system message whether to adopt the cross-carrier scheduling mode or an intra-carrier scheduling mode for resource scheduling over all component carriers supported by the user equipment.

In a second embodiment, the receiving unit 90 is configured to receive a system message carrying the first indicator over the component carrier.

Correspondingly, the determining unit 91 is configured to determine from the system message whether to adopt the cross-carrier scheduling mode or an intra-carrier scheduling mode for resource scheduling over the component carrier in the first indicator.

In a third embodiment, the receiving unit 90 is configured to receive Radio Resource Control (RRC) signalling, transmitted from the network device, carrying the first indicator.

Correspondingly, the determining unit 91 is configured to determine from the RRC signalling whether to adopt the cross-carrier scheduling mode or an intra-carrier scheduling mode for resource scheduling over all component carriers supported by the user equipment.

In a fourth embodiment, the receiving unit 90 is configured to receive Radio Resource Control (RRC) signalling, transmitted from the network device, carrying the first indicator.

Correspondingly, the determining unit 91 is configured to determine from the RRC signalling whether to adopt the cross-carrier scheduling mode or an intra-carrier scheduling mode for resource scheduling over the component carrier in the first indicator.

The user equipment further includes:
a detecting unit 92 configured to detect a PDCCH over the component carrier, for which the determining unit determines the cross-carrier scheduling mode to be adopted for resource scheduling, in accordance with a DCI format corresponding to the cross-carrier scheduling mode; or to detect a PDCCH over the component carrier, for which the determining unit determines the cross-carrier scheduling mode not to be adopted for resource scheduling, in accordance with a DCI format corresponding to the intra-carrier scheduling mode.

The network device in the invention can be a base station or any other device at the network side capable of communication with the user equipment.

In summary the invention offers the following advantageous effects.

In the embodiments of the invention, a network device transmits an indicator of whether to adopt a cross-carrier scheduling mode for resource scheduling of a component carrier to a user equipment; and the user equipment determines from the received indicator whether to adopt the cross-carrier scheduling mode for resource scheduling over the component carrier supported by the user equipment, so that a UE supporting multi-carriers in an LTE-A system can determine which mode is adopted for carrier scheduling of a specific component carrier or some component carriers and further receive corresponding scheduling signalling according to the scheduling mode to thereby transmit and receive data over a scheduled data resource.

Those skilled in the art shall appreciate that the embodiments of the invention can be embodied as a method, system or computer program product. Therefore, the invention can be embodied in the form of an all-hardware embodiment, an all-software embodiment or an embodiment of software and hardware in combination. Furthermore, the invention can be embodied in the form of a computer program product embodied in one or more computer useable storage mediums (including but not limited to a disk memory, a CD-ROM, an optical memory) in which computer useable program codes are contained.

The invention has been described in a flow chart and/or a block diagram of the method, device (system) and computer program product according to the embodiments of the invention. It shall be appreciated that respective flows and/or blocks in the flow chart and/or the block diagram and combinations of the flows and/or blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operations are performed on the computer or the other programmable data processing device to create a computer implemented process so that the instructions executed on the computer or the other programmable device provide operations for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore, the appended claims are intended to be construed as encompassing the preferred embodiments and all the modifications and variations coming into the scope of the invention.

It will be appreciated that one skilled in the art may make various modifications and alterations to the present invention without departing from the scope of the present invention. Accordingly, if these modifications and alterations to the present invention fall within the scope of the claims of the present invention and their equivalents, the present invention intends to include all these modifications and alterations.

## Claims

1. A method for indicating a carrier scheduling mode in a Long Term Evolution-Advanced, LTE-A, system, comprising:
determining, by a network device, whether to adopt a cross-carrier scheduling mode for resource scheduling of a component carrier; and
transmitting, by the network device, a first indicator of whether to adopt the cross-carrier scheduling mode for resource scheduling of the component carrier to a user equipment to indicate to the user equipment whether to adopt the cross-carrier scheduling mode for resource scheduling over the component carrier supported by the user equipment.

2. The method according to claim 1, wherein the component carrier in the first indicator is each component carrier in the system, and transmitting by the network device the first indicator to the user equipment comprises:
carrying, by the network device, the first indicator in a system message and broadcasting the system message to the user equipment; or
the component carrier in the first indicator is a specific component carrier in the system, and transmitting by the network device the first indicator to the user equipment comprises:
carrying, by the network device, the first indicator in a system message and broadcasting the system message to the user equipment over the component carrier in the first indicator.

3. The method according to claim 2, wherein the component carrier in the first indicator is each component carrier in the system, and after the network device transmits the first indicator to the user equipment, the method further comprises:
carrying, by the network device, in a system message a reconfigured second indicator of whether to adopt the cross-carrier scheduling mode for resource scheduling of all component carriers in the system and broadcasting the system message, or carrying the second indicator in Radio Resource Control, RRC, signalling and transmitting the RRC signalling to the user equipment; or
the component carrier in the first indicator is a specific component carrier in the system, and after the network device transmits the first indicator to the user equipment, the method further comprises:
carrying, by the network device, in a system message a reconfigured second indicator of whether to adopt the cross-carrier scheduling mode for resource scheduling of the specific component carrier and broadcasting the system message over the component carrier in the second indicator, or carrying the second indicator in Radio Resource Control, RRC, signalling and transmitting the RRC signalling to the user equipment.

4. The method according to claim 1, wherein the component carrier in the first indicator is all or a part of component carriers supported by the user equipment, and transmitting by the network device the first indicator to the user equipment comprises:
carrying, by the network device, the first indicator in Radio Resource Control, RRC, signalling and transmitting the RRC signalling to the user equipment.

5. The method according to claim 4, wherein after the network device transmits the first indicator to the user equipment, the method further comprises:
carrying, by the network device, in RRC signalling a reconfigured second indicator of whether to adopt the cross-carrier scheduling mode for resource scheduling of all or a part of component carriers supported by the user equipment and transmitting the RRC signalling to the user equipment.

6. The method according to any one of claims 1 to 5, wherein when the network device transmits the first indicator or the second indicator to the user equipment, the method further comprises:
transmitting, by the network device, identifiers of all or a part of component carriers supported by the LTE-A system to the user equipment.

7. A method for determining a carrier scheduling mode in a Long Term Evolution-Advanced, LTE-A, system, comprising:
receiving, by a user equipment, a first indicator, transmitted from a network device, of whether to adopt a cross-carrier scheduling mode for resource scheduling of a component carrier; and
determining, by the user equipment, from the first indicator whether to adopt the cross-carrier scheduling mode for resource scheduling over the component carrier supported by the user equipment.

8. The method according to claim 7, wherein receiving by the user equipment the first indicator comprises:
receiving a system message, broadcasted from the network device, carrying the first indicator; and
determining by the user equipment whether to adopt the cross-carrier scheduling mode for resource scheduling over the component carrier supported by the user equipment comprises:
determining, by the user equipment, from the first indicator whether to adopt the cross-carrier scheduling mode or an intra-carrier scheduling mode for resource scheduling over all component carriers supported by the user equipment upon determining that the component carrier in the first indicator is each component carrier in the system; or
determining, by the user equipment, from the first indicator whether to adopt the cross-carrier scheduling mode or the intra-carrier scheduling mode for resource scheduling over the component carrier in the first indicator upon determining that the component carrier in the first indicator is a specific component carrier in the system.

9. The method according to claim 8, further comprising:
receiving, by the user equipment, a system message or RRC signalling, transmitted from the network device, carrying a reconfigured second indicator of whether to adopt the cross-carrier scheduling mode for resource scheduling of the component carrier; and
determining again, by the user equipment, from the second indicator whether to adopt the cross-carrier scheduling mode or the intra-carrier scheduling mode for resource scheduling over all component carriers supported by the user equipment upon determining that the component carrier in the second indicator is each component carrier in the system; or
determining again, by the user equipment, from the second indicator whether to adopt the cross-carrier scheduling mode or the intra-carrier scheduling mode for resource scheduling over the component carrier in the second indicator upon determining that the component carrier in the second indicator is a specific component carrier in the system.

10. The method according to claim 7, wherein receiving by the user equipment the first indicator comprises:
receiving Radio Resource Control, RRC, signalling, transmitted from the network device, carrying the first indicator; and
determining by the user equipment whether to adopt the cross-carrier scheduling mode for resource scheduling over the component carrier supported by the user equipment comprises:
determining, by the user equipment, from the first indicator whether to adopt the cross-carrier scheduling mode or an intra-carrier scheduling mode for resource scheduling over the component carrier in the first indicator.

11. The method according to claim 10, further comprising:
receiving, by the user equipment, RRC signalling, transmitted from the network device, carrying a reconfigured second indicator of whether to adopt the cross-carrier scheduling mode for resource scheduling of all or a part of component carriers supported by the user equipment; and
determining again, by the user equipment, from the second indicator whether to adopt the cross-carrier scheduling mode or the intra-carrier scheduling mode for resource scheduling over the component carrier in the second indicator.

12. The method according to any one of claims 7 to 11, further comprising:
detecting, by the user equipment, a Physical Downlink Control Channel, PDCCH, over the component carrier, for which the cross-carrier scheduling mode is determined to be adopted for resource scheduling, in accordance with a Downlink Control Information, DCI, format corresponding to the cross-carrier scheduling mode; or
detecting, by the user equipment, a PDCCH over the component carrier, for which the cross-carrier scheduling mode is determined not to be adopted for resource scheduling, in accordance with a DCI format corresponding to an intra-carrier scheduling mode.

13. A network device, comprising:
a determining unit configured to determine whether to adopt a cross-carrier scheduling mode for a component carrier; and
a transmitting unit configured to transmit a first indicator of whether to adopt the cross-carrier scheduling mode for resource scheduling of the component carrier to a user equipment.

14. The network device according to claim 13, wherein the transmitting unit comprises one or any combination of a first indicating unit, a second indicating unit, a third indicating unit and a fourth indicating unit, wherein:
the first indicating unit is configured to carry in a system message the first indicator of whether to adopt the cross-carrier scheduling mode for resource scheduling of all component carriers in a system and broadcast the system message to the user equipment;
the second indicating unit is configured to carry in a system message the first indicator of whether to adopt the cross-carrier scheduling mode for resource scheduling of a specific component carrier in the system and broadcast the system message to the user equipment over the component carrier in the first indicator;
the third indicating unit is configured to carry in Radio Resource Control, RRC, signalling the first indicator of whether to adopt the cross-carrier scheduling mode for resource scheduling of all component carriers supported by the user equipment and transmit the RRC signalling to the user equipment; and
the fourth indicating unit is configured to carry in Radio Resource Control, RRC, signalling the first indicator of whether to adopt the cross-carrier scheduling mode for resource scheduling of a part of component carriers supported by the user equipment and transmit the RRC signalling to the user equipment.

15. The network device according to claim 13 or 14, further comprising one or any combination of a first re-indicating unit, a second re-indicating unit and a third re-indicating unit, wherein:
the first re-indicating unit is configured to carry in a system message a reconfigured second indicator of whether to adopt the cross-carrier scheduling mode for resource scheduling of all component carriers in a system and broadcast the system message to the user equipment, or to carry the second indicator in Radio Resource Control, RRC, signalling and transmit the RRC signalling to the user equipment;
the second re-indicating unit is configured to carry in a system message a reconfigured second indicator of whether to adopt the cross-carrier scheduling mode for resource scheduling of a specific component carrier and broadcast the system message over the component carrier in the second indicator, or to carry the second indicator in Radio Resource Control, RRC, signalling and transmit the RRC signalling to the user equipment; and
the third re-indicating unit is configured to carry in RRC signalling a reconfigured second indicator of whether to adopt the cross-carrier scheduling mode for resource scheduling of all or a part of component carriers supported by the user equipment and transmit the RRC signalling to the user equipment.

16. The network device according to claim 13 or 14, wherein the transmitting unit is further configured to transmit identifiers of all or a part of component carriers supported by a Long Term Evolution, LTE-A, system to the user equipment.

17. A user equipment, comprising:
a receiving unit configured to receive a first indicator, transmitted from a network device, of whether to adopt a cross-carrier scheduling mode for resource scheduling of a component carrier; and
a determining unit configured to determine from the first indicator whether to adopt the cross-carrier scheduling mode for resource scheduling over the component carrier supported by the user equipment.

18. The user equipment according to claim 17, wherein the receiving unit comprises one or any combination of a first receiving subunit, a second receiving subunit, a third receiving subunit and a fourth receiving subunit:
the first receiving subunit is configured to receive a system message, broadcasted from the network device, carrying the first indicator; and
the second receiving subunit is configured to receive Radio Resource Control, RRC, signalling, transmitted from the network device, carrying the first indicator; and
the determining unit comprises one or any combination of a first determining subunit and a second determining subunit:
the first determining subunit is configured to determine from the first indicator whether to adopt the cross-carrier scheduling mode or an intra-carrier scheduling mode for resource scheduling over all component carriers supported by the user equipment upon determining that the component carrier in the first indicator is each component carrier in a system;
the second determining subunit is configured to determine from the first indicator whether to adopt the cross-carrier scheduling mode or the intra-carrier scheduling mode for resource scheduling over the component carrier in the first indicator upon determining that the component carrier in the first indicator is a specific component carrier in the system; and
a third determining subunit is configured to determine from the second indicator whether to adopt the cross-carrier scheduling mode or the intra-carrier scheduling mode for resource scheduling over the component carrier in the first indicator upon determining that the component carrier in the first indicator is all or a part of component carriers supported by the user equipment.

19. The user equipment according to claim 17 or 18, further comprising:
a detecting unit configured to detect a Physical Downlink Control Channel, PDCCH, over the component carrier, for which the determining unit determines the cross-carrier scheduling mode to be adopted for resource scheduling, in accordance with a Downlink Control Information, DCI, format corresponding to the cross-carrier scheduling mode; or to detect a PDCCH over the component carrier, for which the determining unit determines the cross-carrier scheduling mode not to be adopted for resource scheduling, in accordance with a DCI format corresponding to an intra-carrier scheduling mode.
